# EUROPÄISCHE PATENTSCHRIFT

(11) **EP 0 825 524 B1**
(45) Veröffentlichungstag und Bekanntmachung des Hinweises auf die Patenterteilung: **19.01.2000**
(21) Anmeldenummer: 96440062.6
(22) Anmeldetag: 20.08.1996
(51) Int. Cl.: G06F 9/46

(54) **Verfahren zur Verwaltung der Benennung von Objekten**
Method for naming of objects
Procédé pour nommer des objets

(43) Veröffentlichungstag der Anmeldung: 25.02.1998
(73) Patentinhaber: ALCATEL, 75008 Paris (FR)
(72) Erfinder: Potonniee, Olivier, 75011 Paris (FR)
(74) Vertreter: Kugler, Hermann, Dipl.-Phys.

(56) Entgegenhaltungen:
- INTERNATIONAL CONFERENCE ON DISTRIBUTED COMPUTING SYSTEMS, SAN JOSE, JUNE 13 - 17, 1988, 13.Juni 1988, INSTITUTE OF ELECTRICAL AND ELECTRONICS ENGINEERS, Seiten 18-24, XP000092920 KENTARO SHIMIZU ET AL: "HIERARCHICAL OBJECT GROUPS IN DISTRIBUTED OPERATING SYSTEMS"
- SIGMOD RECORD, Bd. 23, Nr. 2, Juni 1994, Seite 479 XP000607948 MARTIN B E: "COSS: THE COMMON OBJECT SERVICES SPECIFICATIONS"
- IBM TECHNICAL DISCLOSURE BULLETIN, Bd. 38, Nr. 3, 1.März 1995, Seiten 617-619, XP000508157 "USE OF XA-COMPLIANT TO INTEROPERATE WITH OBJECT TRANSACTION SERVICE"

## Beschreibung

Die Erfindung betrifft ein Verfahren zur Verwaltung der Benennung von Objekten in einer Objekt Umgebung, in der eine Vielzahl von Objekte über CORBA-Mechanismen interagieren, nach dem Oberbegriff von Anspruch 1, ein Verfahren zum Abbilden einer logischen Adresse eines Objekts auf eine physikalische CORBA-Adressen eines Objektes nach dem Oberbegriff von Anspruch 10, eine Rechnereinheit nach dem Oberbegriff von Anspruch 11 und ein Computersystem nach dem Oberbegriff von Anspruch 12.

Für die softwaremäßige Realisierung von verteilten Computersystemen wird zunehmend die objektorientierte Modellierung als Architekturprinzip verwendet. Eine solche Software - Architektur eines Computersystems ist die CORBA - Architektur (CORBA = Common Object Request Broker Architecture), die eine bedeutende Komponente der von der Object Management Group (OMG) spezifizierten OSA-Architektur (OSA = Object Service Architecture) ist.

Die Erfindung geht nun von der Art und Weise aus, wie die Verwaltung der Benennung von Objekten (Managed Objects) normalerweise in einem Computersystem nach der CORBA - Architektur durchgeführt wird. Dies ist beispielsweise in "Common Object Request Broker: Archtitecture and Specification r2.0", Object Management Group, Framingham, Massachusetts, 1995, beschrieben.

Für die Benennungsverwaltung ist ein zentraler CORBA-Dienst (naming service) zuständig, der diesen Dienst in einem zentralen Knoten (naming server) erbringt. Die Benennungverwaltung umfaßt hierbei insbesondere das Abbilden einer logischen Adresse eines Objekts auf eine physikalische CORBA-Adresse (object reference). Diese Abbildungsfunktion ist von existentieller Bedeutung für ein CORBA-System, da Objekte, die auf einer CORBA Infrastruktur agieren, nur mittels dieser physikalischen Adresse aufgefunden werden können.

Probleme entstehen nun, wenn Objekte, die nicht als CORBA Objekte spezifiziert sind, auf der CORBA Infrastruktur über CORBA Mechanismen interagieren sollen. Je nachdem, wie solche Objekte in die CORBA-Architektur implementiert werden, ergeben sich eigenständige Benennungsbereiche, auf die nicht auf einheitliche Weise zugegriffen werden kann. Die zentrale Benennungsverwaltung kann diese Bereiche nicht verwalten und ein Zugriff auf Objekte dieser Benennungsbereiche ist kaum mit CORBA Mechanismen möglich.

Weiter wird in dem Tagungsband der International Conference On Distributed Computing Systems, San Jose, Juni 13-17, 1988, IEEE, Seiten 18-24 der Aufbau eines aus einer Vielzahl von Objekten bestehenden Betriebsystems beschrieben.

Jedem Objekt ist eine systemweit einmalige ID zugeordnet, die zusammen mit anderen Informationen in einer systemweiten Tabelle gespeichert ist. Die IDs werden von einem ID Manager verwaltet, wobei jeder Rechnerknoten des Systems mit einer Kopie des ID Managers ausgestattet ist. Der ID Manager wird darüberhinaus von den Objekt Managern dazu benutzt, den physikalischen Ort von Kopien des Objektes zu ermitteln. Weiter ist es möglich, Objekte, die auch verschiedenen Rechnerknoten zugeordnet sein können, in einer Objekt-Gruppe zu gruppieren. Eine Objekt Gruppe stellt hierbei wiederum ein Objekt dar und besitzt somit ebenfalls eine ID. Für die Benennung der Objekte werden hierarchisch strukturierte Namen verwendet, wobei es auch möglich ist, einer Objekt Gruppe genauso wie einem Objekt einen Namen in der Namenshierarchie zuzuordnen.

Der Erfindung liegt nun die Aufgabe zugrunde, eine flexiblere Benennungsverwaltung anzugeben.

Diese Aufgabe wird gelöst durch Verfahren nach der Lehre von Anspruch 1 und 10, durch eine Rechnereinheit nach der Lehre von Anspruch 11 und durch ein Computersystem nach der Lehre von Anspruch 12.

Der Erfindung liegt hierbei der Gedanke zugrunde, daß die Benennungsverwaltung nicht mehr zentral durchgeführt wird, sondern über Komponenten verteilt durchgeführt wird. Jede Komponente besteht aus einem oder mehreren Objekten und ist jeweils für die Benennungsverwaltung der unmittelbar nachfolgenden Komponenten zuständig. Diese verteilten Elemente der Benennungsverwaltung arbeiten hierbei mittels eines rekursiven Algorithmus zusammen und bilden durch eine Zusammenarbeit entsprechend dieses rekursiven Algorithmus eine logische Adresse eines Objektes auf dessen physikalische CORBA-Adresse (object reference) ab. Aufgrund der verteilten Natur der Benennungsverwaltung ist hierbei eine Einbindung spezieller Benennungsverwaltungen für spezielle eigenständige Benennungsbereiche in die CORBA-Benennungsverwaltung auf einfache Weise möglich.

Ein weiterer Vorteil ist, daß so die Transparenz der Implementierung gewahrt bleibt. Weiter werden unterschiedliche Benennungsbereiche in ein einziges Benennungsschema integriert. Eine unterschiedliche Namensverwaltung in einer verteilten Umgebung wird möglich gemacht.

Weitere Vorteile ergeben sich, wenn in allen Teil-Benennungsverwaltungen eine für alle Komponenten einheitliche CORBA-Schnittstelle Zugriffe auf die Verwaltung der Benennung gibt. Damit steht allen Applikationen eine einheitliche Schnittstelle (API = Application Interface) zur Benennungsverwaltung zur Verfügung, unabhängig, in welchem Benennungsbereich sich die Objekte befinden.

Im Folgenden wird die Erfindung anhand eines Ausführungsbeispiels unter Zuhilfenahme beiliegender Zeichnungen beispielhaft erläutert:
Fig. 1a zeigt eine Blockschaltbild eines erfindungsgemäßen Computersystems.
Fig. 1b zeigt eine funktionelle Darstellung der Software Struktur das Computersystems nach Fig.1.
Fig. 2 zeigt eine symbolische Darstellung von Abhängigkeitsverhältnissen zwischen Objekten und von sich ergebenden Nummerierungsbereichen.
Fig. 3a zeigt eine funktionelle Darstellung einer ersten Möglichkeit der Anbindung von nicht in CORBA spezifizierten Objekten.
Fig. 3b zeigt eine funktionelle Darstellung einer zweiten Möglichkeit der Anbindung von nicht in CORBA spezifizierten Objekten.
Fig. 4a zeigt eine funktionelle Darstellung einer dritten Möglichkeit der Anbindung von nicht in CORBA spezifizierten Objekten.
Fig. 4b zeigt eine funktionelle Darstellung einer vierten Möglichkeit der Anbindung von nicht in CORBA spezifizierten Objekten.

In dem Ausführungsbeispiel wird die Durchführung der erfindungsgemäßen Verfahren in einem erfindungsgemäßen Computersystem beschrieben, das aus einem oder aus mehreren erfindungsgemäßen Rechnereinheiten besteht, auf denen jeweils ein oder mehrere erfindungsgemäßes Programm-Modul ablaufen.

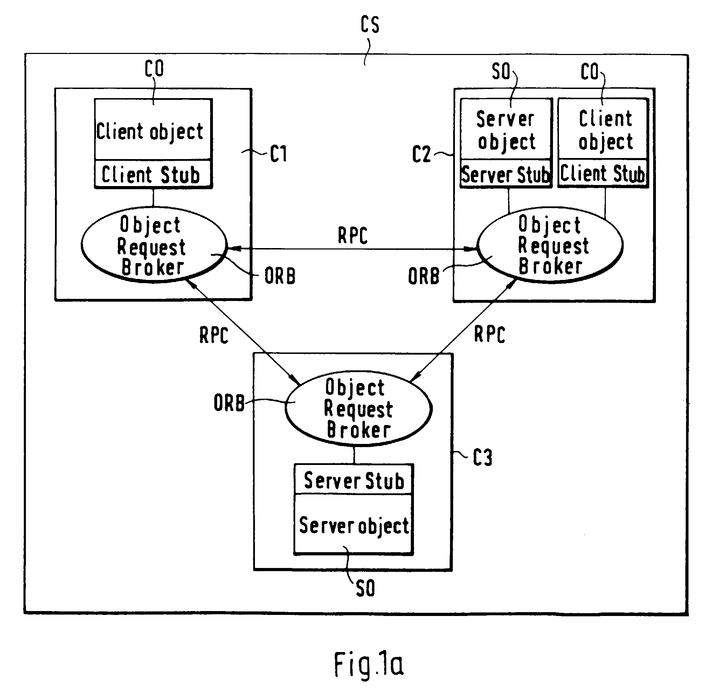

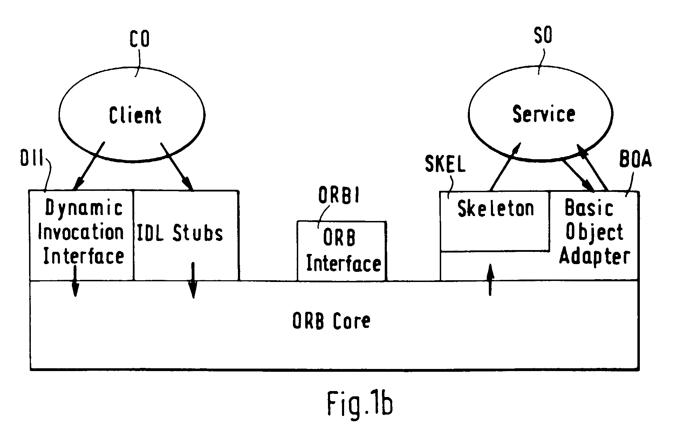

Fig. 1 zeigt ein Computersystem CS mit drei Rechnereinheiten C1 bis C3, die untereinander kommunizieren.

Bei den Rechnereinheiten C1 bis C3 handelt es sich beispielsweise um Computer, Drucker oder um Netzelemente eines Kommunikationsnetzes. Sie weisen jeweils eine Hardware-Plattform, bestehend aus Prozessoren, Speichereinrichtungen und peripheren Komponenten, eine Software-Plattform, die beispielsweise ein Betriebssystem und ein Datenbanksystem umfaßt und Anwendungen auf, die von auf der Software-Plattform ablaufenden Anwendungs-Programm-Modulen gebildet werden. Die Rechnereinheiten C1 bis C3 sind durch ein oder mehrere Kommunikationsnetze untereinander verbunden, beispielsweise durch X.25, #7, Ethernt oder Token-Ring Kommunikationssysteme. Die Software-Plattform der Rechnereinheiten C1 bis C3 stellt hierbei die notwendigen Datenübertragungsdienste bereit.

Die Anwendungs-Programm-Module sind als Objekte (Managed objekt) modelliert, d. h. der Code und die Daten eines Objektes werden durch eine Summe von Attributen und Funktionen repräsentiert, auf die andere Objekte zugreifen können. Durch das wechselseitige Zugreifen einer Vielzahl solcher Objekte werden sodann die Anwendungsfunktionen des Computersystems CS erbracht.

Gemäß der CORBA-Architektur weisen die Rechnereinheiten C1 bis C3 mehrere Objekte CO und SO und mehrere Objekt-Anforderungs-Broker (Object Request Broker) ORB auf.

Aus der Dienstsicht können die Objekte CO und SO jeweils als eine verkapselte Einheit betrachtet werden, die einen oder mehrere Dienste zur Verfügung stellt, die von einem Klienten (client) angefordert werden können. Die Objekte CO fordern hierbei Dienste an (Client Object), die von den Objekten SO erbracht werden (Server Objects).

Zum Anfordern eines Dienstes sendet ein CO eine Anforderungs-Nachricht (request) an ein SO. Eine solche Anforderungs-Nachricht enthält hierbei folgende Informationen: eine Operation, ein Ziel-Objekt, keinen oder mehrere Parameter und optional einen Anforderungs-Kontext (request context). Nach Erbringen des Dienstes sendet das SO eine Ergebnis-Nachricht (outcome) an das CO zurück, das für diese Anforderungsnachricht definiert ist.

Zum Senden und zum Empfang der Anforderungs- und Ergebnisnachrichten steht den Objekten SO und CO eine Schnittstelleneinheit IU zur Verfügung.

Die Objekt-Anforderungs-Broker (ORB) stellen eine Infrastruktur zur Verfügung, die es den Objekten erlaubt, in einer verteilten Umgebung zu kommunizieren. Für die Objekte CO ist es damit nicht von Bedeutung auf welchem der anderen der Rechnereinheiten C1 bis C3 ein Objekt SO, dessen Dienst sie anfordern wollen, angesiedelt ist und auf welcher speziellen Plattform oder in welchem Implementierungsverfahren das Objekt realisiert ist.

Jedes Objekt kennt hierzu zumindest einen Objekt-Anforderungs-Broker ORB und weiß, wie sie diesen lokalen Objekt-Anforderungs-Broker zu kontaktieren hat. Jeder Objekt-Anforderungs-Broker weiß wie er andere Objekt-Anforderungs-Broker kontaktieren kann und wie er mit ihnen zu kommunizieren hat. Hierfür verwendet er das RPC-Verfahren (RPC = remote procedure call mechanisms). Ein Objekt sendet somit eine Anforderungsnachricht an einen der Objekt-Anforderungs-Broker ORB. Das Weiterreichen der Anforderungsnachricht an das Ziel-Objekt wird durch die von den Objekt-Anforderungs-Broker ORB gebildeten CORBA-Infrastruktur erledigt.

Fig. 1b zeigt eine Darstellung der Kommunikationsmechanismen für die Kommunikation zwischen einem CO und einem SO. Fig. 1b zeigt eine Kommunikationsschicht ORB Core, eine darüberliegende Kommunikationsschicht mit fünf Funktionseinheiten DII, IDLStubs, ORBI, SKEL und BOA und zwei auf diese Funktionseinheiten zugreifende Objekte CO und SO.

Um über die CORBA-Infrastruktur mittels CORBA-Mechanismen interagieren zu können und mit anderen Objekten auf dieser Infrastruktur zusammenarbeiten zu können, muß jedes der Objekte CO und SO über eine CORBA spezifische Schnittstelle (Interface) verfügen. Eine solche Schnittstelle enthält hierbei eine Beschreibung eines Satzes von möglichen Operationen, die ein anderes Objekt von diesem Objekt anfordern kann. Die Schnittstellen der Objekte sind hierbei in der Beschreibungssprache IDL (Interface Definition Language) definiert, bei der es sich um eine reine Schnittstellen-Beschreibungssprache handelt. Die Vererbung (inheritance) dieser Interfaces erlaubt es, daß ein Objekt mehrere Schnittstellen unterstützt.

In CORBA wird auf ein Objekt direkt über diese CORBA spezifische Schnittstelle zugegriffen. Die Implementierung dieser Schnittstelle ist das Objekt selbst. Es besteht aus Code und Daten und benötigt somit keine Ausführungsinstanz (Agent entity), wie dies der Fall ist, wenn ein Objekt rein durch eine Datenstruktur repräsentiert ist.

Um eine Anforderungsnachricht zu senden benötigt das Objekt CO Zugriff zu der Referenz (Object Reference) des Objektes SO, benötigt Kenntnis über den Typ des Objektes SO und die Operation, die von diesem ausgeführt werden soll. Das Objekt CO initiiert die Anforderungsnachricht, indem es Rufroutinen (stub routines) der Funktionseinheit IDLStube aufruft oder indem sie die Anforderungsnachricht dynamisch mittels der Funktionseinheit DII erzeugt (Dynamic Invocation Interface). Das zweite Vorgehen ermöglicht es hierbei einen Dienst anzufordern, der bei der Entwicklung des Objektes CO noch nicht bekannt war.

Der Empfang der Anforderungsnachricht wird beim Objekt SO durch Funktionen der Funktionseinheit BOA unterstützt (Basic Object Adapter). Es ist auch möglich, daß das Objekt mittels Funktionen der Funktionseinheit SKEL eine Schnittstelle anbietet, die der obigen zweiten Möglichkeit entspricht.

Es ist nun auch möglich, daß das Computersystem neben den Objekten CO und SO weitere Objekt enthält, die nicht in CORBA spezifiziert sind und über spezielle Schnittstelleneinheiten über die oben beschriebene CORBA-Infrastruktur untereinander und mit den Objekten CO und SO interagieren. Für die weiter Erläuterung des Ausführungsbeispieles wird nun angenommen, daß das Computersystem CS solche Objekte in unterschiedlicher Implementierung auf der CORBA-Infrastruktur besitzt.

Die Verwendung solcher hybrider Komponenten auf einer CORBA-Infrastruktur hat hierbei den Vorteil, daß bereits bestehende, gemäß einer anderen Objekt-Modell Architektur spezifizierte Objekte wiederverwendet werden können und eine Zusammenarbeit solcher Objekte mit CORBA Objekten ermöglicht wird. Dies hat vor allem im Bereich des Netzwerkmanagement große Vorteile, da in diesem Bereich bereits eine Vielzahl von Objekten bestehen, die gemäß des OSI-Objektmodells spezifiziert sind. OSI-Netzwerkmanagement-Komponenten, beispielsweise Manager, Agent, Mediation Device, werden jeweils von einem oder mehreren solchen OSI-Objekten gebildet.

Für den Bereich des Netzwerkmanagements ist von der OSI (Open System Interconnection) ein Objektmodell standardisiert (Management framework for open systems interconnection, ITU-T Recommendation X.700, 1992). Neben dem Objektmodell (SMI = Structure of Management Information) sind auch grundlegende Objekte, ein Set von Management Diensten (CMIS common management information service definition) und ein Netzwerkmanagement-Protokoll (CMIP = Common Management Information Protocol) zur Kommunikation der Objekte untereinander spezifiziert. Objekte sind in der Beschreibungssprache GEMO spezifiziert, die ASN Syntax verwendet und weitere eigene Makros enthält.

Der prinzipielle Unterschied zwischen "natürlichen" CORBA-Objekten und natürlichen" OSI-Objekten besteht darin, daß die CORBA Objekte die Implementierung der CORBA-Schnittstelle darstellen, wohingegen die OSI-Objekte eines Netzwerkmanagementelements als Datenstruktur im MIB-Datensatz (Management Information Base) abgelegt sind und durch einen Agenten, mit dem mittels des CEMIP-Protokolls kommuniziert wird, manipuliert werden.
Weiter ist die Benennung und Adressierung in der CORBA und der OSI Architektur unterschiedlich. In CORBA besitzt ein Objekt zwei Adressen: eine logische Adresse, beispielsweise einen Namen in einem bestimmten Kontext, und eine physikalische Adresse (object reference), die den physikalischen Ort, beispielsweise die Adresse des Servers, auf dem das Objekt abläuft, angibt, wo sich das Objekt befindet. Diese Adresse ist für das Auffinden und die Interaktion mit einem CORBA-Objekt entscheidend. In OSI besitzt ein Objekt nur eine logische Adresse (full distinguish name), die sich aus seiner Position im Abhängigkeitsbaum der Objekte ergibt. Diese Adresse besteht aus den Namen aller Objekte auf dem Weg von der Wurzel des Abhängigkeitsbaumes bis zu dem Objekt.

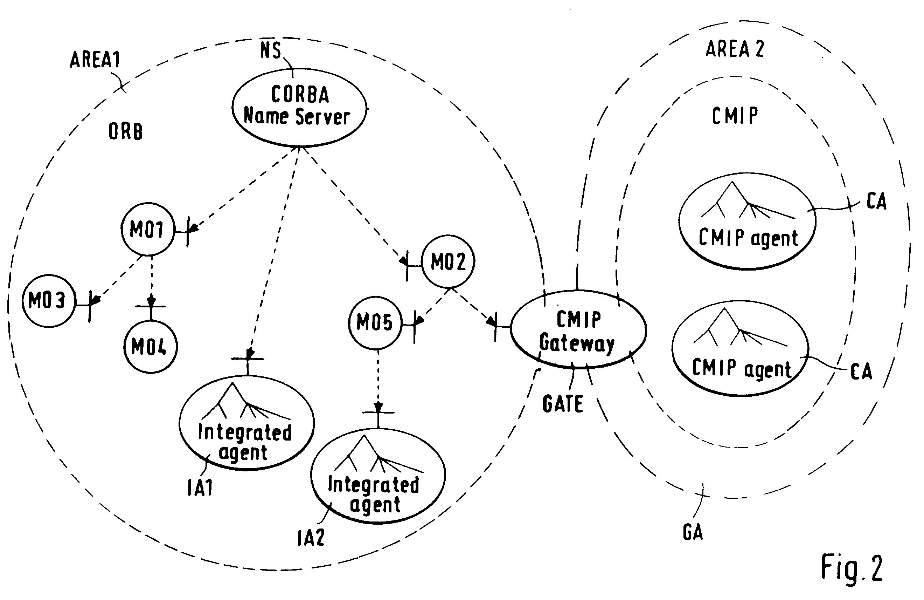

Fig. 2 zeigt nun eine Darstellung der logischen Abhängigkeiten zwischen Komponenten des Computersystems CS, wenn auf dem Computersystem CS auch nicht CORBA spezifizierte Objekte auf der CORBA Infrastruktur implementiert sind.

Fig. 2 zeigt zwei Bereiche AREA1 und AREA2, einen Dienst NS und mehrere Komponenten MO1 bis MO5, IA1, IA2 und GA, zwischen denen ein logisches Abhängigkeitsverhältnis definiert ist.

In dem Bereich AREA1 erfolgt die Interaktion von Objekten mittels CORBA-Mechanismen auf der Basis einer CORBA Infrastruktur. Im Bereich AREA2 erfolgt die Interaktion von Objekten mittels des CEMIP Protokolls.

Jede der Komponenten MO1 bis MO5, IA1, IA2 und GA enthält ein oder mehrere Objekte und führt die Verwaltung der Benennung der ihr unmittelbar nachfolgenden Komponente durch. Die Wurzel des so definierten Abhängigkeitsbaumes bildet der Dienst NS. Dieser ist für die Verwaltung der Benennung der Komponenten MO1, IA1 und MO2 zuständig. D. h. der Name der Komponenten MO1, IA1 und MO2 ist in seinem Namens-Kontext (naming context) enthalten. Die Komponente MO1 ist für die Verwaltung der Benennung der Komponenten MO3 und MO4 zuständig. Die Komponente MO2 ist für die Verwaltung der Benennung der Komponenten MO5 und GA zuständig. Die Komponente MO5 ist für die Verwaltung der Benennung der Komponente IA2 zuständig.

Die Komponenten MO1 bis MO5 sind natürliche" CORBA-Objekte, wie sie nach Fig. 1a und Fig. 1b beschrieben sind. Diesen Komponenten ist somit jeweils ein CORBA-Objekt zugeordnet. Das Abhängigkeitsverhältnis zwischen diesen Komponenten folgt hierbei dem Abhängigkeitsverhältnis zwischen den Objekten. Ein CORBA Server kann hierbei auch mehrere CORBA-Objekte umfassen.

Bei den Komponenten IA1 und IA2 handelt es sich jeweils um einen oder um mehrere Objekte, die in CORBA spezifiziert und sind mittels einer speziellen Schnittstelleneinheit so verkapselt sind, daß sie über CORBA- Mechanismen über die CORBA Infrastruktur agieren können. Jede dieser Komponenten bildet somit einen eigenständigen Benennungsbereich, der intern verwaltet wird.

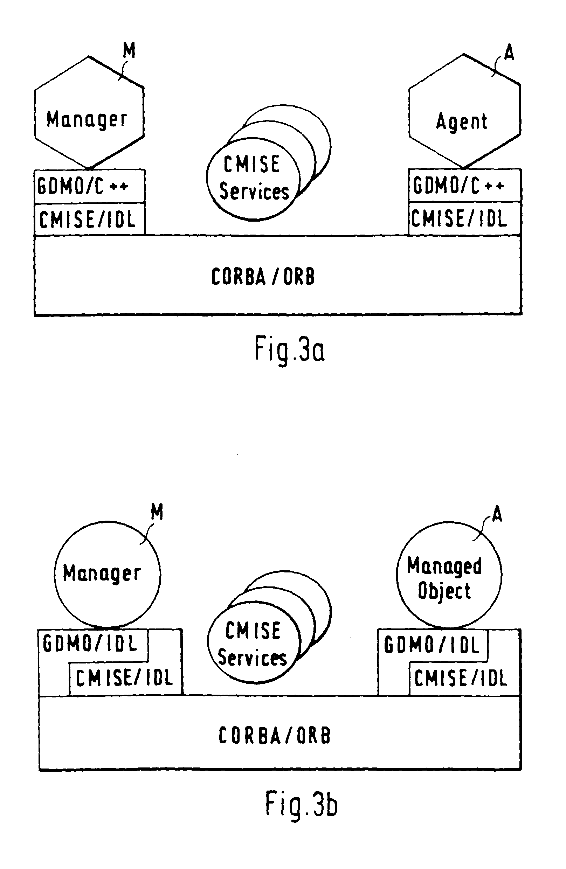

Beispiele für die Realisierung solcher Komponenten sind in Fig. 3a und Fig. 3b dargestellt.

Fig. 3a und 3b zeigen eine Darstellung der Kommunikationsmechanismen für die Kommunikation zwischen zwei Komponenten IA1 und IA2 über die CORBA-Infrastruktur. Die Komponenten IA1 und IA2 werden in der Beschreibung zu Fig. 3a und 3b mit M und A bezeichnet.

Fig. 3a zeigt eine Kommunikationsschicht CORB/ORB, mehrere über diese Kommunikationsschicht allgemein zur Verfügung stehende Dienste CMISE Services, zwei Netzwerkmanagement-Komponenten M und A und jeweils zwei zwischen diesen Objekten und der Kommunikationsschicht CORB/ORB gelegenen Kommunikationsfunktionen GMO/C++ und CMISE/IDL.

Bei den Komponenten M und A handelt es sich nicht um CORBA-Objekte, sondern jeweils um ein oder mehrere OSI- Objekte OM bzw. OA und einer Manager bzw. Agent Funktionseinheit. Mittels der Agent bzw. Manager Funktionseinheit werden Operationen auf diesen Objekten ausgeführt bzw. Anforderungen an andere Objekte versendet. Agent und Manager Funktionseinheit kommunizieren über das CMIP -Protokoll. Aus der Sichtweise des Netzwerkmanagement nimmt die Komponente M die Rolle eines Managers (Manager) und die Komponente A die eines Agenten (Agent) ein.

Die Kommuniktationseinheit GDMO/C++ besteht aus einem oder mehreren speziellen Zugriffs-Objekten, die die Ausführung von CMISE Operationen auf den Objekten OA oder OM ermöglichen.

Die CMISE Management Dienste werden durch ein CMISE-Objekt auf der Seite des Objektes OA realisiert. Die Schnittstelleneinheit CMISE/IDL enthält dieses CMISE-Objekt und die diesem Objekt zugeordneten Dienste. Das CMISE-Objekt der Schnittstelleneinheit CMISE/IDL ist durch ein IDL-Interface spezifiziert ist und agiert und erscheint so nach außen wie ein CORBA-Objekt. Um diese Spezifizierung und damit die Bereitstellung einer CORBA-Schnittstelle zu dem Objekt OA zu ermöglichen, ist eine Typkonvertierung von ASN.1 in IDL Typen notwendig. CMISE-Dienste stellen somit als ein Set von CORBA Objekten zur Verfügung. Durch über die CORBA-Infrastruktur geleitet CORBA-Anforderung können so CMISE-Operationen auf dem Objekt OA ausgeführt werden. Gleiches gilt für das Objekt MO.

Eine zweite Möglichkeit der Anbindung von OSI-Objekten über eine CORBA-Infrastruktur ist in Fig. 3b aufgezeigt

Fig. 3b zeigt die Kommunikationsschicht CORB/ORB, mehrere über diese Kommunikationsschicht allgemein zur Verfügung stehende Dienste CMISE Services, die Objekte OM und OA und jeweils zwei zwischen diesen Objekten und der Kommunikationsschicht CORB/ORB gelegenen Kommunikationsfunktionen GDMO/IDL und CMISE/IDL

Durch die Schnittstelleneinheit GDMO/IDL werden die in GDMO spezifizierten OSI-Objekte der Komponenten A und M in eine Spezifikation als IDL Schnittstelle übersetzt. Auf ein so spezifiziertes Objekt kann durch klassische CORBA-Nachrichten zugegriffen werden. Jedes dieser OSI-Objekte wird somit in ein reines CORBA Objekt transformiert. Da die Spezifikation in IDL und ASN.1 von unterschiedlicher Natur sind (Schnittstellenbeschreibung 〈-〉 Objekt- Spezifikation) ist keine vollkommene Übersetzung möglich und nur ein Untermenge von CMISE-Diensten wird über die Schnittstelleneinheit GDMO/IDL angeboten. Dies bedeute, daß nur eine Untermenge von CMISE Operationen auf den transformierten CORBA-Objekten ausführbar ist.

Die Objekte der Komponenten IA1 und IA2 besitzen ebenfalls ein Abhängigkeitsverhältnis, das durch die Datenstruktur im MIB-Datensatz repräsentiert ist. Jede der Komponenten IA1 und IA2 besitzt ein Benennung, die als Namens-Kontext in der vorausgehenden Komponente registriert und von dieser verwaltet wird. Dieser Namens-Kontext stellt somit die Wurzel des internen Abhängigkeitsbaumes der Komponenten IA1 und IA2 dar. Man könnte auch sagen, daß dieser Kontext die Wurzel des Benennungsbereiches der Komponente IA1 oder IA2 repräsentiert. Der Agent der Komponente IA1 und IA2 verwaltet die Benennung der von der Wurzel des internen Abhängigkeitsbaumes abhängenden Komponente selbständig, die Benennungsverwaltung der MIB wird so eigenständig geregelt. Weiter bildet diese Benennungsverwaltung aufgrund der rekursiven Natur auch eine Teil-Einheit der CORBA- Benennungsverwaltung und interagiert somit auch mit den übrigen Teilen der CORBA-Benennungsverwaltung.

Bei der Komponente GA handelt es sich um mehrere Netzwerkmanagement Elemente (CMIP Agents), die über das CMIP Protokoll interagieren und mittels eines Gateways GATE mit der CORBA Infrastruktur verbunden sind. Diese Netzelemente bilden zusammen einen eigenständigen Benennungsbereich, der über das Gateway GATE angebunden ist.

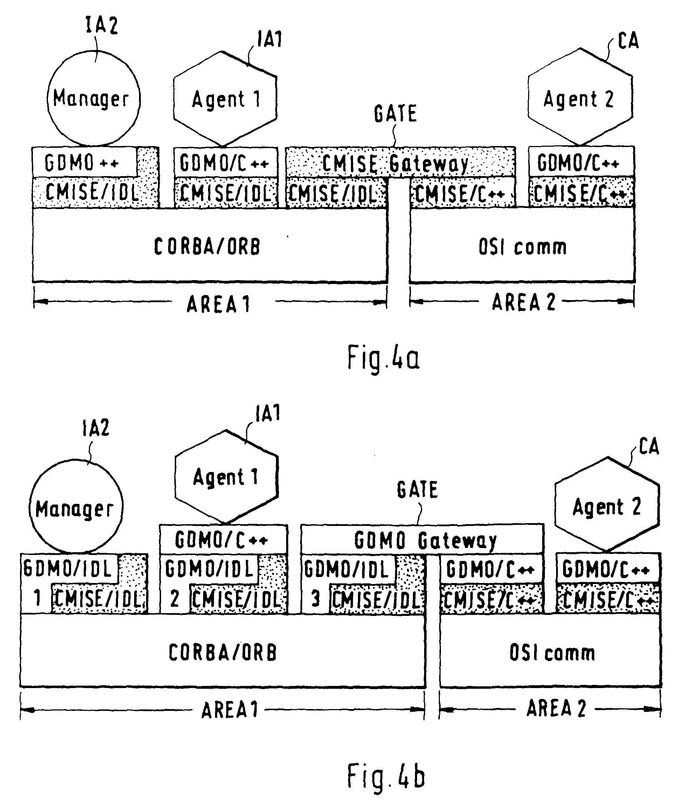

In Fig. 4a und Fig. 4b sind Möglichkeiten der Interaktion zwischen solchen Netzwerkmanagement-Komponenten über das Gateway GATE dargestellt.

Die genaue Funktionsweise ergibt sich aus der Darstellung in den Figuren 4a und 4b zusammen mit der Beschreibung der korrespondieren Einheiten, die bereits in der Beschreibung zu den Figuren 3a und 3b gemacht wurde.

Die Schnittstelle zu der Komponente GA bildet das Gateway GATE. Die Benennung der Komponente GA wird von der Komponente MO2 verwaltet. In dieser sind so viele Benennungs-Kontexte für die Komponente GA enthalten, wie Wurzeln von internen Abhängigkeitsbäumen im Bereich AREA2 vorhanden sind. Normalerweise besitzt jedes Netzelement CA einen Datensatz MIB, mit einem Abhängigkeitsbaum, der über eine Wurzel verfügt. Somit wären beispielsweise in der Namensverwaltung der Komponente MO2 für die Komponente GA zwei Namenskontexte gespeichert und werden verwaltet, die jeweils die Wurzel eines OSI Abhängigkeitsbaumes repräsentieren. Man könnte auch sagen, daß diese Namenskontexte die Wurzel innerhalb des eigenständigen Benennungsbereiches der Komponente GA repräsentieren.

Die weitere Namensverwaltung innerhalb des Bereiches AREA2 wird mittels der in der OSI Architektur vorgesehenen Namensverwaltung durchgeführt. Weiter bildet diese Benennungsverwaltung aufgrund der rekursiven Natur auch eine Teil-Einheit der CORBA- Benennungsverwaltung und interagiert somit auch mit den übrigen Teilen der CORBA-Benennungsverwaltung.

Die Teile dieser CORBA Namensverwaltung bieten jeweils eine Zugriffs-Schnittstelle an, die der Zugriffsschnittstelle des CORBA-Benennungs-Dienstes entspricht. Damit ist eine einheitlicher Zugriff auf alle Teile der Namensverwaltung möglich. Wird nun die Übersetzung einer logischen Adresse in eine physikalische CORBA-Adresse von einem solchen Teil der Namensverwaltung angefordert, so interagiert dieser Teil der Namensverwaltung entsprechenden einem rekursiven Algorithmus mit den anderen Teilen der Namensverwaltung. Dieser rekursive Algorithmus besteht beispielsweise darin, daß entsprechend der logischen Adresse im Abhängigkeitsbaum der Komponenten von einem Teil der Namensverwaltung zum nächsten Teil der Namensverwaltung gegangen wird, bis man den Teil der Namensverwaltung erreicht hat, in dem die logische Adresse des gesuchten Objekts abgespeichert ist. Dies kann das für die Benennung der Komponente, der dieses Objekt zugeordnet ist, zuständigen Komponente zugeordnete Teil der Benennungsverwaltung sein, wenn es sich bei der Komponente um ein CORBA- Objekt handelt. Es kann sich hierbei aber auch um die interne Namensverwaltung der Komponente handeln, der das Objekt zugeordnet ist, wenn es sich beispielsweise hierbei um eine Komponente der Art der Komponenten IA1, IA2 oder GA handelt.

## Patentansprüche

1. Verfahren zur Verwaltung der Benennung von Objekten in einer Objekt Umgebung, in der eine Vielzahl von Objekten über CORBA-Mechanismen interagieren,
**dadurch gekennzeichnet**, daß jeweils ein oder mehrere Objekte der Vielzahl von Objekten einer ein oder mehrere Objekte der Vielzahl von Objekten umfassenden Komponente (MO1 bis M5, IA1, IA2, GA) zugeordnet werden, daß die Verwaltung der Benennung der Vielzahl von Objekten über die Komponenten (MO1 bis M5, IA1, IA2, GA) verteilt und von Teil-Benennungsverwaltungen erbracht wird, die jeweils einer Komponente (MO1 bis M5, IA1, IA2, GA) zugeordnet sind, und daß jede Teil-Benennungsverwaltung einer Komponente die Benennung der dieser Komponente gemäß eines Abhängigkeitsbaums unmittelbar nachfolgenden Komponente oder die Benennung der dieser Komponente gemäß eines Abhängigkeitsbaums unmittelbar nachfolgenden Komponenten verwaltet.

2. Verfahren nach Anspruch 1, dadurch gekennzeichnet, daß jede Komponente (MO1 bis M5, IA1, IA2, GA) der nachfolgenden Komponente über eine für alle Komponenten einheitliche CORBA-Schnittstelle Zugriffe auf die Verwaltung der Benennung gibt.

3. Verfahren nach Anspruch 1, dadurch gekennzeichnet, daß die Teil-Benennungsverwaltungen mittels eines rekursiven Algorithmus zusammenwirken.

4. Verfahren nach Anspruch 1, dadurch gekennzeichnet, daß ein zentraler CORBA-Dienst die Wurzel des von den Komponenten gebildeten Abhängigkeitsbaumes bildet.

5. Verfahren nach Anspruch 1, dadurch gekennzeichnet, daß eine erste Art von Komponenten (MO1 bis M5) jeweils von einem CORBA-Objekt gebildet wird.

6. Verfahren nach Anspruch 1, dadurch gekennzeichnet, daß eine zweite Art von Komponenten (IA1, IA2, GA) jeweils von einer Anzahl von nicht in CORBA spezifizierten Objekten gebildet wird, die einen eigenständigen Benennungsbereich formen, für dessen Verwaltung sie selbst zuständig sind.

7. Verfahren nach Anspruch 6, dadurch gekennzeichnet, daß die logische Wurzel des eigenständigen Benennungsbereiches die Verwaltung der Benennung für diese Komponente zentral durchführt.

8. Verfahren nach Anspruch 6, dadurch gekennzeichnet, daß eine erste Unterart der zweiten Art von Komponenten (IA1, IA2) von einem OSI-Netzwerkmanagementelement gebildet wird, auf das eine CORBA-Schnittstelle aufgesetzt ist.

9. Verfahren nach Anspruch 6, dadurch gekennzeichnet, daß eine zweite Unterart der zweiten Art von Komponenten (GA) von einem oder von mehreren OSI-Netzwerkmanagementelementen gebildet wird, auf die über ein Gateway zugegriffen wird.

10. Verfahren zum Abbilden einer logischen Adresse eines Objekts auf eine physikalische CORBA-Adresse eines Objektes in einer Objekt Umgebung, in der eine Vielzahl von Objekten über CORBA-Mechanismen interagieren, wobei bei dem Verfahren die Abbildung von einer Benennungsverwaltung erbracht wird,
**dadurch gekennzeichnet**, daß die Abbildung durch die Zusammenarbeit von zwei oder mehr Teil-Benennungsverwaltungen erbracht wird, die jeweils für eine Komponente (MO1 bis M5, IA1, IA2, GA) die Benennung der ihr gemäß eines Abhängigkeitsbaums unmittelbar nachfolgenden Komponente oder der ihr gemäß eines Abhängigkeitsbaums unmittelbar nachfolgenden Komponenten verwaltet, wobei solche Komponenten (MO1 bis M5, IA1, IA2, GA) jeweils ein oder mehrere Objekte der Vielzahl von Objekten umfassen.

11. Rechnereinheit mit einem Programm-Modul, das mit einer CORBA-Schnittstelle zur Interaktion als CORBA-Objekt über CORBA-Mechanismen und mit einem Satz erster Funktionen zur Bereitstellung von Anwendungs-Diensten versehen ist,
**dadurch gekennzeichnet,** daß das Programm-Modul eine oder mehrere zweite Funktionen enthält, die so ausgestaltet sind, daß sie die Verwaltung der Benennung der ihnen in einem Abhängigkeitsbaum unmittelbar nachfolgenden Kind-Objekten durchführen.

12. Computersystem mit einer Vielzahl von Objekten, die über CORBA-Mechanismen interagieren, und mit einer Benennungsverwaltung für diese Vielzahl von Objekten,
**dadurch gekennzeichnet**, daß jeweils ein oder mehrere Objekte der Vielzahl von Objekten einer ein oder mehrere Objekte der Vielzahl von Objekten umfassenden Komponente (MO1 bis M5, IA1, IA2, GA) zugeordnet sind, daß die Verwaltung der Benennung der Vielzahl von Objekten über die Komponenten (MO1 bis M5, IA1, IA2, GA) verteilt ist und Teil-Benennungsverwaltungen umfaßt, die jeweils einer Komponente (MO1 bis M5, IA1, IA2, GA) zugeordnet sind und so ausgestaltet sind, daß jede Teil-Benennungsverwaltungen einer Komponente die Benennung der dieser Komponente gemäß eines Abhängigkeitsbaums unmittelbar nachfolgenden Komponente oder die Benennung der dieser Komponente gemäß eines Abhängigkeitsbaums unmittelbar nachfolgenden Komponenten verwaltet.

13. Computersystem nach Anspruch 12, dadurch gekennzeichnet daß das Computersystem eine Netzwerkmanagement-System ist.

## Claims

1. A method of managing the naming of objects in an object environment in which a plurality of objects interact via CORBA mechanisms, characterised in that in each case one or more object(s) of the plurality of objects are assigned to a component (MO1 to M5, IA1, IA2, GA) comprising one or more object(s) of the plurality of objects, that the management of the naming of the plurality of objects is distributed between the components (MO1 to M5, IA1, IA2, GA) and implemented by subsidiary naming management units in each case assigned to a component (MO1 to M5, IA1, IA2, GA), and that each subsidiary naming management unit of a component manages the naming of the component directly following this component in accordance with a dependency tree or the naming of the components directly following this component in accordance with a dependency tree.

2. A method according to Claim 1, characterised in that, via a CORBA interface uniform for all the components, each component (MO1 to M5, IA1, IA2, GA) provides the following component with access to the naming management.

3. A method according to Claim 1, characterised in that the subsidiary naming management units cooperate by means of a recursive algorithm.

4. A method according to Claim 1, characterised in that a central CORBA service forms the root of the dependency tree formed by the components.

5. A method according to Claim 1, characterised in that a first type of components (MO1 to M5) is in each case formed by a CORBA object.

6. A method according to Claim 1, characterised in that a second type of components (IA1, IA2, GA) is in each case formed by a number of objects which are not specified in CORBA and which form an independent naming area for whose management they themselves are responsible.

7. A method according to Claim 6, characterised in that the logic root of the independent naming area centrally manages the naming for this component.

8. A method according to Claim 6, characterised in that a first sub-type of the second type of components (IA1, IA2) is formed by a OSI network management element at which a CORBA interface is positioned.

9. A method according to Claim 6, characterised in that a second sub-type of the second type of components (GA) is formed by one or several OSI network management element(s) accessed via a gateway.

10. A method of mapping a logic address of an object onto a physical CORBA address of an object in an object environment in which a plurality of objects interact via CORBA mechanisms, in which method the mapping is implemented by a naming management, characterised in that the mapping is implemented by the cooperation of two more subsidiary naming management units, which, in each case for a component (MO1 to M5, IA1, IA2, GA), manage the naming of the component directly following said component in accordance with a dependency tree, or the components directly following said component in accordance with a dependency tree, such components (MO1 to M5, IA1, IA2, GA) in each case comprising one or more object(s) of the plurality of objects.

11. A computer unit with a program module which is provided with a CORBA interface for interaction as CORBA object via CORBA mechanisms, and with a set of first functions for the provision of application services, characterised in that the program module contains one or more second function(s) which are contrived such that they manage the naming of the kind-objects by which they are directly followed in a dependency tree.

12. A computer system with a plurality of objects which interact via CORBA mechanisms and with a naming management for this plurality of objects, characterised in that in each case one or more objects of the plurality of objects are assigned to a component (MO1 to M5, IA1, IA2, GA) comprising one or more object(s) of the plurality of objects, that the management of the naming of the plurality of objects is distributed between the components (MO1 to M5, IA1, IA2, GA) and comprises subsidiary naming management units which are in each case assigned to a component (MO1 to M5, IA1, IA2, GA) and contrived such that each subsidiary naming management unit of a component manages the naming of the component directly following this component in accordance with a dependency tree or the naming of the components directly following this component in accordance with a dependency tree.

13. A computer system according to Claim 12, characterised in that the computer system is a network management system.

## Revendications

1. Procédé pour gérer l'affectation de noms à des objets dans un environnement d'objets dans lequel une pluralité d'objets interagissent par l'intermédiaire de mécanismes CORBA, caractérisé en ce que respectivement un ou plusieurs objets sont affectés à un composant (MO1 à M5, IA1, IA2, GA) comprenant un ou plusieurs objets de la pluralité d'objets, en ce que la gestion de l'affectation de noms de la pluralité d'objets est effectuée de façon répartie sur les composants (MO1 à M5, IA1, IA2, GA) et par des gestions partielles de l'affectation de noms qui sont affectées respectivement à un composant (MO1 à M5, IA1, IA2, GA), et en ce que chaque gestion partielle de l'affectation de noms d'un composant gère l'affectation de noms du composant suivant immédiatement ce composant selon un arbre de dépendance ou l'affectation de noms du composant suivant immédiatement ce composant selon un arbre de dépendance.

2. Procédé selon la revendication 1, caractérisé en ce que chaque composant (MO1 à M5, IA1, IA2, GA) donne accès à la gestion de l'affectation de noms au composant suivant par l'intermédiaire d'une interface CORBA cohérente pour tous les composants.

3. Procédé selon la revendication 1, caractérisé en ce que les gestions partielles de l'affectation de noms coopèrent au moyen d'un algorithme récursif.

4. Procédé selon la revendication 1, caractérisé en ce qu'un service CORBA central constitue la racine de l'arbre de dépendance constitué par les composants.

5. Procédé selon la revendication 1, caractérisé en ce qu'un premier type de composants (MO1 à M5) est constitué respectivement par un objet CORBA.

6. Procédé selon la revendication 1, caractérisé en ce qu'un deuxième type de composants (IA1, IA2, GA) est constitué respectivement par une quantité d'objets non spécifiés en CORBA qui constituent une zone autonome d'affectation de noms dont ils prennent eux-mêmes en charge la gestion.

7. Procédé selon la revendication 6, caractérisé en ce que la racine logique de la zone autonome d'affectation de noms effectue de façon centrale la gestion de l'affectation de noms pour ce composant.

8. Procédé selon la revendication 6, caractérisé en ce qu'un premier sous-type du deuxième type de composants (IA1, IA2) est constitué par un élément de gestion de réseau OSI auquel est ajouté une interface CORBA.

9. Procédé selon la revendication 6, caractérisé en ce qu'un deuxième sous-type du deuxième type de composants (GA) est constitué par un ou plusieurs éléments de gestion de réseau OSI auxquels on accède par une passerelle.

10. Procédé pour représenter une adresse logique d'un objet sur une adresse CORBA physique d'un objet dans un environnement d'objets, dans lequel une pluralité d'objets interagissent par l'intermédiaire de mécanismes CORBA, dans lequel pendant le procédé, la représentation d'une gestion de l'affectation de noms est assurée, caractérisé en ce que la représentation est assurée par la coopération de deux ou plusieurs gestions partielles de l'affectation de noms qui gèrent respectivement pour un composant (MO1 à M5, IA1, IA2, GA) l'affectation de noms du composant le suivant immédiatement selon un arbre de dépendance ou du composant le suivant immédiatement selon un arbre de dépendance, dans lequel ces composants (MO1 à M5, IA1, IA2, GA) comprennent respectivement un ou plusieurs objets de la pluralité d'objets.

11. Unité de calcul avec un module de programme qui est équipée d'une interface CORBA pour interagir comme un objet CORBA par l'intermédiaire de mécanismes CORBA et d'un ensemble de premières fonctions pour fournir des services d'application, caractérisée en ce que le module de programme contient une ou plusieurs deuxièmes fonctions qui sont réalisées de telle sorte qu'elles effectuent la gestion de l'affectation de noms des objets fils les suivant immédiatement dans un arbre de dépendance.

12. Système informatique avec une pluralité d'objets qui interagissent par l'intermédiaire de mécanismes CORBA et avec une gestion de l'affectation de noms pour cette pluralité d'objets, caractérisé en ce que respectivement un ou plusieurs objets de la pluralité d'objets sont affectés à un composant (MO1 à M5, IA1, IA2, GA) comprenant un ou plusieurs objets de la pluralité d'objets, en ce que la gestion de l'affectation de noms de la pluralité d'objets est répartie sur les composants (MO1 à M5, IA1, IA2, GA) et comprend des gestions partielles de l'affectation de noms qui sont respectivement affectées à un composant (MO1 à M5, IA1, IA2, GA) et sont réalisées de telle sorte que chaque gestion partielle de l'affectation de noms d'un composant gère l'affectation de noms du composant suivant immédiatement ce composant selon un arbre de dépendance ou l'affectation de noms du composant suivant immédiatement ce composant selon un arbre de dépendance.

13. Système informatique selon la revendication 12, caractérisé en ce que le système informatique est un système de gestion de réseau.
